# EUROPÄISCHE PATENTSCHRIFT

(11) **EP 1 099 099 B1**
(45) Veröffentlichungstag und Bekanntmachung des Hinweises auf die Patenterteilung: **06.11.2002**
(21) Anmeldenummer: 99934659.6
(22) Anmeldetag: 12.07.1999
(51) Int. Cl.: G01J 3/02

(54) **VERFAHREN ZUR ÜBERPRÜFUNG DER FUNKTIONSFÄHIGKEIT EINES SPEKTROMETERS UND SPEKTROMETER MIT FEHLERERKENNUNGSVORRICHTUNG**
METHOD FOR TESTING THE FUNCTIONALITY OF A SPECTROMETER, AND A SPECTROMETER COMPRISING A FAULT RECOGNITION DEVICE
PROCEDE DE CONTROLE DE L'APTITUDE AU FONCTIONNEMENT D'UN SPECTROMETRE, ET SPECTROMETRE POURVU D'UN DISPOSITIF DE RECONNAISSANCE DE DEFAUTS

(30) Priorität: 21.07.1998 DE 19833793
(43) Veröffentlichungstag der Anmeldung: 16.05.2001
(73) Patentinhaber: INSTITUT FUR CHEMO- UND BIOSENSORIK Münster E.V., 48149 Münster (DE)
(72) Erfinder: HUTH-FEHRE, Thomas, D-48341 Altenberge (DE); KOWOL, Frank, D-48151 Münster (DE)
(74) Vertreter: Pfenning, Meinig & Partner
(86) Internationale Anmeldenummer: EP9904865
(87) Internationale Veröffentlichungsnummer: WO00005555

(56) Entgegenhaltungen:
- US-A- 4 449 821
- US-A- 5 557 544

## Beschreibung

Die Erfindung betrifft ein Verfahren zur Überprüfung der Funktionsfähigkeit eines Spektrometers auf Fehler und ein Spektrometer mit Fehlererkennungseinrichtung.

Optische Spektrometer mit einem einfachen Aufbau werden verstärkt in verschiedenen Gebieten und Bereichen der Technik eingesetzt, so beispielsweise im Automobilbereich oder bei der Anwendung zum Sortieren von Gegenständen. Eines der Hauptprobleme solcher optischen Spektrometer stellt die Überwachung der Langzeitstabilität des Systems dar. So muß zum einen der Zustand der primären Lichtquelle und die Transmission bzw. der Verschmutzungsgrad des Spektrometers überwacht werden und zum anderen muß die spektrale Kalibrierung des Systems sichergestellt werden.

US-A-4 449 821 beschreibt ein Verfahren zur Kalibrierung einer Lichtquelle für ein Spektralgerät, bei dem die Farbtemperatur der Lichtquelle bestimmt wird und gesteuert. Bei diesem Verfahren wird nur die Lichtquelle - ohne Durchgang des Spektralgeräts - kontrolliert.

US-A-5 557 544 offenbart ein Spektrometer mit austauschbaren Elementen, die jeweils mit einem Datenträger zur vereinfachten Kalibrierung versehen sind.

Der heutige Stand der Technik sieht bislang noch keine oder nur aufwendige Möglichkeiten vor, die optischen Spezifikationen eines Spektrometers als Ganzes zu valdidieren und ermöglicht nur eine eingeschränkte elektronische Überprüfung der Einzelkomponenten. Auch das übliche Nachreferenzieren des Spektrometers mittels einer Probe oder dergleichen garantiert keineswegs ein Funktionieren des Systems, zum Beispiel bei beschädigten Filtern.

Der Erfindung liegt daher die Aufgabe zugrunde, ein Verfahren zur Überprüfung der Funktionsfähigkeit eines Spektrometers und ein Spektrometer zu schaffen, mit denen die Überwachung der Langzeitstabilität des Spektrometers auch bei nicht unmittelbarer Zugänglichkeit des Spektrometers möglich ist.

Diese Aufgabe wird erfindungsgemäß durch die kennzeichnenden Merkmale der Ansprüche 1 und 8 in Verbindung mit deren Oberbegriffen gelöst.

Ein wesentlicher Gedanke der Erfindung liegt darin, die Farbtemperatur einer Strahlungsquelle veränderbar einzustellen und aufgrund der bekannten Planck'schen Strahlungskurve, die mit sehr guter Näherung auch für die verwendete Strahlungsquelle gilt, auf die optischen Merkmale des Spektrometers zu schließen. Durch die bekannten Emissionswerte der Strahlungsquelle bei unterschiedlichen Farbtemperaturen ist es möglich, einen entsprechend großen Datenraum aufzuspannen, um das Spektrometer optisch vollständig zu überprüfen. Dabei können die als Referenzwerte verwendeten bekannten Emissionswerte durch ein Parallelspektrometer mit N Wellenlängenkanälen zum Beispiel bei zwei Farbtemperaturen der Strahlungsquelle bestimmt werden, woraus sich der resultierende 2N-dimensionale Daten-. raum zur Überprüfung des Spektrometers ergibt. Für den Vorgang der Langzeitkontrolle kann eine Zusatzstrahlungsquelle vorgesehen werden, die auf der Empfängerseite, das heißt hinter dem zu transmittierenden oder reflektierenden Objekt angeordnet ist und die auf frei wählbare Farbtemperaturen einstellbar ist. Es kann aber auch die Farbtemperatur der Primärstrahlungsquelle durchfahren werden, dabei muß aber beachtet werden, daß der optische Weg keine variablen Parameter, wie zum Beispiel Objekte mit wechselnden Materialeigenschaften bzw. lichttechnischen Kennzahlen enthalten darf. Dies kann durch ein Referenzmaterial, zum Beispiel Teflon, vermieden werden.

Mit der Erfindung kann ein Test der folgenden Spektrometer-Parameter durchgeführt werden:
1. Die Gesamttransmission des Spektrometers kann über die Intensität der einzelnen Kanäle erfaßt werden (Kontrolle von Faserbrüchen, Linsenkratzern, Stromausfall der Verstärkerelektronik, Ausfall der Primärstrahlungsquelle oder der Zusatzstrahlungsquelle);
2. die Einzeltransmission der verschiedenen Filter bzw. Detektoren wird über die Einzelintensität der verschiedenen Kanäle getestet (Kontrolle der einzelnen Filtertransmissionen und der integralen spektralen Empfindlichkeit der einzelnen Detektoren bzw. deren Totalausfall) ;
3. die einzelnen spektralen Merkmale der optischen Komponenten können aufgrund der Abweichung eines einzelnen Kanals vom Sollwert bei konstanten Werten der anderen Kanäle kontrolliert werden (Kontrolle von Farbzentrenbildung der Faser, Absorptionen der Linse, Wellenlängenverschiebung der einzelnen Filter);
4. die integralen spektralen Merkmale dienen als Selbstkontrolle der Zusatzstrahlungsquelle (Kontrolle der Farbtemperatur bei konstantem Lampenstrom mit zuvor festgelegtem Referenzwert).

Aufgrund der Fehlererkennung kann bei kleineren Abweichungen eine interne Nachkalibration des Spektrometers vorgenommen werden, andernfalls kann bei größeren Fehlern eine genaue Fehlermeldung oder Diagnose ausgegeben werden, wodurch eine eventuelle Reparatur wesentlich erleichtert wird.

Die Erfindung bietet für den Langzeitbetrieb eines Spektrometers, zum Beispiel im Automobilbereich, ohne größeren Wartungsaufwand eine zuverlässige Diagnoseeinheit, ohne die ein Einsatz des Spektrometers nicht möglich ist.

Durch die in den abhängigen Ansprüchen angegebenen Maßnahmen sind vorteilhafte Weiterbildungen und Verbesserungen möglich.

Ausführungsbeispiele der Erfindung sind in der Zeichnung dargestellt und werden in der nachfolgenden Beschreibung näher erläutert. Es zeigen:
- Fig. 1: den schematischen Aufbau eines Spektrometers, wie es beispielsweise im Automobilbereich einsetzbar ist,
- Fig. 2a) bis 2d): Darstellungen der möglichen überprüfbaren Spektrometer-Fehler mit einer Strahlungsquelle mit einer veränderbar einstellbaren Farbtemperatur.

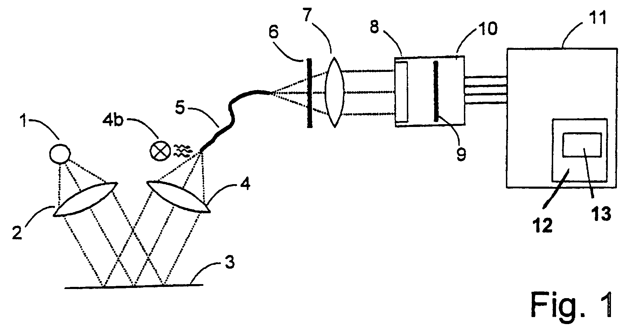

Das in Fig. 1 dargestellte Spektrometer weist eine Lichtquelle 1 auf, die beispielsweise als Halogenlampe mit einem breiten Spektrum ausgebildet ist. Das von der Halogenlampe 1 ausgesandte Licht wird durch eine Linse 2 in ein paralleles Strahlenbündel umgewandelt, das ein schematisch dargestelltes Objekt 3 bestrahlt. Dieses Objekt 3 kann sich schnell an der Bestrahlungsstelle vorbeibewegen, so daß eine schnelle Spektralmessung aller Wellenlängen bzw. aller gewünschten Wellenlängen simultan vorgenommen werden muß. Das vom Objekt 3 reflektierte Licht wird mit einer Konvexlinse 4 gesammelt und in einen Lichtleiter 5 eingekoppelt. Im Ausführungsbeispiel wird das aus dem Lichtleiter 5 austretende Licht über eine Streuscheibe 6 gestreut und mit Hilfe einer Konvexlinse 7 parallel geformt und auf eine Interferenzfilteranordnung 8 gegeben. Der Filteranordnung 8, die beispielsweise schmalbandige Interferenzfilter aufweist, ist eine Empfängeranordnung 9 nachgeschaltet, die im vorliegenden Fall als eine oder mehrere Photodioden ausgebildet ist. Es sind beispielsweise vier verschiedene Interferenzfilter 8 vorgesehen, wobei entsprechend diesen vier verschiedenen Interferenzfiltern eine Quadrantenphotodiode 9 verwendet werden kann, auf die vorzugsweise die Interferenzfilter 8 direkt auf das Fenster der Quadrantenphotodiode 9 aufgedampft sind. Filter und Diode sind in einem Gehäuse 10 aufgenommen. Die vier Detektoren der Quadrantenphotodiode 9 detektieren die Intensität der vier Wellenlängen und geben dieses Signal an eine Auswerteeinheit 11 weiter.

Selbstverständlich können auch andere Arten von Detektoren und Filtern verwendet werden, beispielsweise kann ein CCD-Zeilen- oder Matrix-Detektor verwendet werden, wobei bei wellenlängenselektiven Detektorelementen die Filter weggelassen werden können.

In der Auswerteeinheit 11 werden die empfangenen Wellenlängensignale in bezug auf das Objekt 3 ausgewertet.

Die Auswerteeinheit 11 umfaßt eine Fehlererkennungs- bzw. Diagnoseeinheit 12, die Fehler im Übertragungsweg der Strahlung erfaßt. Um die Möglichkeit zu bieten, daß eine Diagnose vorgenommen werden kann, ohne daß Verfälschungen der Strahlung der Strahlungsquelle durch das Objekt 3 auftreten, ist eine Zusatzlichtquelle 4b auf der Empfangsseite vorgesehen, deren abgegebene Strahlung über Umlenkmittel, wie Strahlteiler oder dergleichen, direkt in den Lichtleiter 5 eingekoppelt wird. Bei der Diagnose werden die Lichtquelle 1 und/oder die Zusatzlichtquelle 4b auf definierte Farbtemperaturen eingestellt, wobei die Lichtquellen über eine gesteuerte und/oder geregelte Spannungsversorgung auf diese Farbtemperaturen eingestellt werden. Über die Empfängeranordnung 9, die im vorliegenden Fall Licht oder Strahlung in vier Wellenlängenbereichen bzw. Wellenlängenkanälen empfängt, werden vier elektrische Empfangssignale gebildet, die in der Auswerte- und Diagnoseeinheit 11, 12 weiterverwertet werden.

Die Diagnoseeinheit 12 hat eine Vielzahl von Referenzwerten für n unterschiedliche Farbtemperaturen bei N unterschiedlichen Wellenlängenbereichen gespeichert, so daß ein n x N-dimensionaler "Datenraum" gegeben ist. Die Referenzwerte werden entweder mit einem Spektralphotometer im "Neuzustand" oder in einem Parallelspektrometer gemessen und in der Diagnoseeinheit 12 gespeichert. Zusätzlich oder anstelle der gemessenen Referenzwerte können Referenzwerte mit der Planck'schen Strahlungsformel berechnet werden, da die Strahlungsquelle einem Planck'schen Strahler ähnlich ist.

Wenn eine Diagnose eines Spektrometers, das beispielsweise in einem Kraftfahrzeug eingebaut ist, durchgeführt werden soll, wird die Zusatzlichtquelle 4b eingeschaltet und vorzugsweise die Lichtquelle 1 ausgeschaltet, wobei die Zusatzlichtquelle 4b über eine Steuer- und Regeleinheit, die mit der Spannungs- bzw. Stromversorgung in Verbindung steht, auf unterschiedliche Farbtemperaturen einstellbar ist. Falls der Strahlungsweg zwischen Lichtquelle 1 und Lichtleiter 5 gleichfalls mitbewertet werden soll, dient als Diagnosestrahlungsquelle die Lichtquelle 1, wobei jedoch das Objekt 3 so ausgebildet werden muß, daß die in der Diagnoseeinheit gespeicherten Referenzwerte zutreffen. Üblicherweise wird die Diagnose mit Zusatzlichtquelle 4b ausreichen, da Lichtquelle 1 und Linsen 2, 4 in einem gekapselten Gehäuse aufgenommen sind, so daß bis auf den Ausfall der Lichtquelle 1 die wesentlichen Fehler hinter der Zusatzlichtquelle 4b auftreten.

Die Diagnoseeinheit 12 wertet die Empfangssignale der unterschiedlichen Wellenlängenkanäle dahingehend aus, ob Fehler auftreten und gibt auf der Anzeige 13 die Meldung aus, um welchen Fehler es sich handelt bzw. ob das Spektrometer nachkalibriert werden muß.

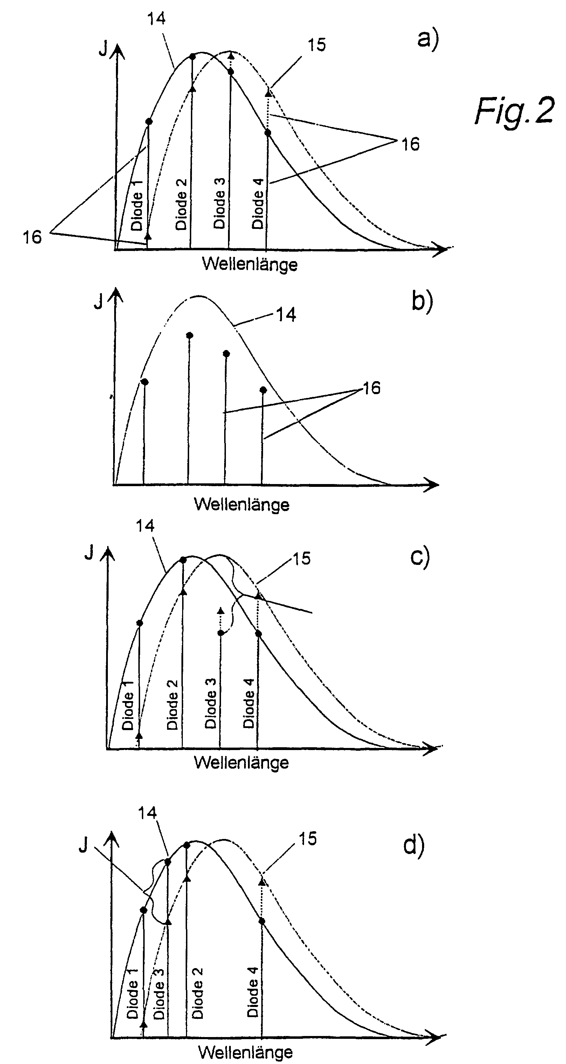

Die Art der Auswertung und die möglichen Fehler werden in Zusammenhang mit Fig. 2 beschrieben. In der Figur sind Empfangsintensitäten über die Wellenlänge dargestellt, wobei das Spektrometer vier verschiedene Wellenlängenbereiche bzw. Wellenlängen aufweist.

In Fig. 2 ist der Photostrom der Detektoren bzw. Dioden in Abhängigkeit von der Wellenlänge dargestellt. Die Kurven 14 und 15 stellen Referenzkurven bei zwei verschiedenen Farbtemperaturen dar, wobei diese Kurven mittels der Planck'schen Strahlungsformel unter Berücksichtigung der im Strahlengang vorhandenen optischen Elemente berechnet wurden und/oder mittels eines Referenzspektrometers gleichen Aufbaus vorher gemessen wurden.

Die jeweiligen Meßwerte 16 in Fig. 2a liegen alle auf den Kurven 14, 15 mit definierten Farbtemperaturen der Zusatzlichtquelle 4b. Diese Meßwerte entsprechen den Referenzwerten, daß heißt es ist kein Fehler vorhanden.

In Fig. 2b) ist zu erkennen, daß alle gemessenen Werte 16 um einen konstanten Faktor unter der durch die Referenzwerte bei dieser Farbtemperatur vorgegebenen Sollkurve 14 liegen. Das bedeutet, daß für alle Wellenlängenkanäle der gleiche Fehler auftritt, das heißt der Strahlungsweg ist verschmutzt oder eine Linse ist beschädigt.

Stimmen bei der Diagnosemessung einige, in den Fign. 2c) und 2d) alle bis auf einen mit der Sollkurve 14 bei einer definierten Farbtemperatur überein, so muß eine weitere Unterscheidung getroffen werden, da sowohl eine Diode oder die Verstärkereinheit oder auch ein dispersives Element zum Beispiel ein Farbfilter defekt sein kann. Entsprechend Fig. 2d) kann das Filter so beschädigt sein, daß eine andere als die gewünschte Wellenlänge durchgelassen wird. Um die Fälle c) und d) unterscheiden zu können, wird die Farbtemperatur um das ΔT entsprechend Kurve 15 verändert und die Änderung des Empfangssignals überwacht. Entsprechend c) ändert sich der nun veränderte Photostrom der Diode proportional mit der einfallenden Lichtleistung der Lichtquelle. Soll- und Istwerte der Photoströme variieren mit einem konstanten Faktor, so daß auf einen Fehler der Diode geschlossen werden kann. In Fig. 2d ist die Diode 3 in der Wellenlänge verschoben und beide Photoströme der Diode 3 haben nun das umgekehrte Verhältnis. Es handelt sich hier um keinen konstanten Faktor mehr, sondern der Faktor hängt von der Wellenlängenverschiebung der Filter ab, das heißt, das Filter der Diode 3 ist defekt.

Zur Feststellung, ob die Farbtemperatur während der jeweiligen einzelnen Messungen konstant bleibt, kann die Stromaufnahme überwacht werden, das heißt, wenn sich die Stromaufnahme der Lampe ändert, ändert sich deren Farbtemperatur. In diesem Fall ist die Lichtquelle defekt und im Extremfall fließt kein Strom, das heißt die Lichtquelle insgesamt ist ausgefallen. Zur Überprüfung, ob die Farbtemperatur wirklich exakt gleichbleibt, kann auch eine Photodiode eingesetzt werden, die die Gesamtleistung der Lampe kontrolliert. Diese ändert sich bei Verschiebung der Farbtemperatur.

## Patentansprüche

1. Verfahren zur Überprüfung der Funktionsfähigkeit eines Spektrometers auf Fehler, das mindestens eine Strahlungsquelle, eine Filteranordnung zum Zerlegen der Strahlung in unterschiedliche Wellenlängenbereiche und eine Empfängeranordnung aufweist,
**dadurch gekennzeichnet, daß** Referenzwerte bei mindestens zwei unterschiedlichen Farbtemperaturen der Strahlungsquelle und jeweils bei den unterschiedlichen Wellenlängenbereichen erstellt werden, daß für die Überprüfung des Spektrometers aktuelle Empfangssignale bei mindestens zwei einzustellenden Farbtemperaturen mit den Referenzwerten verglichen werden und daß bei Abweichungen die Art der Abweichung in Abhängigkeit von den Wellenlängenbereichen und den Farbtemperaturen bestimmt und aus der Art der Abweichung auf bestimmte Fehler geschlossen wird.

2. Verfahren nach Anspruch 1, **dadurch gekennzeichnet, daß** die Stromversorgung der Strahlungsquelle gesteuert und/oder geregelt wird, wobei bei einer Regelung ein Empfänger zur Erfassung der Gesamtleistung der Strahlungsquelle vorgesehen ist.

3. Verfahren nach Anspruch 1 oder 2, **dadurch gekennzeichnet, daß** bei Abweichungen der Empfangssignale aller unterschiedlicher Wellenlängenbereiche bei einer Farbtemperatur von den Referenzwerten um den gleichen Faktor auf einen ersten Fehler erkannt wird.

4. Verfahren nach Anspruch 1 oder 2, **dadurch gekennzeichnet, daß** bei Auftreten von Abweichungen in einem oder mehreren Wellenlängenbereichen, während in den restlichen Wellenlängenbereichen keine Abweichungen auftreten, die Farbtemperatur geändert wird und festgestellt wird, um welchen Faktor sich die jeweilige Abweichung bei unterschiedlichen Farbtemperaturen ändert.

5. Verfahren nach Anspruch 4, **dadurch gekennzeichnet, daß** bei Abweichungen bei gleichem Wellenlängenbereich und unterschiedlichen Farbtemperaturen um einen konstanten Faktor auf einen zweiten Fehler erkannt wird.

6. Verfahren nach Anspruch 4, **dadurch gekennzeichnet, daß** bei Abweichungen bei gleichem Wellenlängenbereich und unterschiedlichen Farbtemperaturen um einen nicht konstanten Faktor auf einen dritten Fehler erkannt wird.

7. Verfahren nach einem der Ansprüche 1 bis 6, **dadurch gekennzeichnet, daß** die Referenzwerte als mit einem Referenzspektrometer gemessenen Meßwerte bei N unterschiedlichen Wellenlängen und n unterschiedlichen Farbtemperaturen als N x n Datenraum erstellt werden und/oder mittels der Planck'schen Strahlungsformel berechnet werden.

8. Spektrometer mit einer Strahlungsquelle zum Bestrahlen eines Objektes, einer Filteranordnung zum Zerlegen der am Objekt reflektierten oder transmittierten Strahlung in unterschiedliche Wellenlängenbereiche und einer Empfängeranordnung zum Messen der Strahlung und Abgeben von Empfangssignalen für die unterschiedlichen Wellenlängenbereiche,
**dadurch gekennzeichnet, daß** eine Fehlererkennungseinrichtung (12) vorgesehen ist, die die Strahlungsquelle und/oder eine Zusatzstrahlungsquelle umfaßt und die die Referenzwerte für die zu messende Strahlung bei den unterschiedlichen Wellenlängenbereichen und für unterschiedliche Farbtemperaturen der Strahlungsquelle und/oder der Zusatzstrahlungsquelle gespeichert hat und/oder nach der Planck'schen Strahlungskurve berechnet und daß eine einstellbare Stromversorgung vorgesehen ist, über die die Farbtemperatur der Strahlungsquelle und/oder der Zusatzstrahlungsquelle einstellbar ist und daß die Fehlererkennungseinrichtung die Empfangssignale für unterschiedliche Wellenlängenbereiche und unterschiedliche Farbtemperaturen mit den entsprechenden Referenzwerten vergleicht und abhängig von der Art der Abweichung in bezug auf die Wellenlängenbereiche und/oder Farbtemperaturen die Art des Fehlers bestimmt.

9. Spektrometer nach Anspruch 8, **dadurch gekennzeichnet, daß** ein Lichtleiter zum Weiterleiten der reflektierten oder transmittierten Strahlung vorgesehen ist.

10. Spektrometer nach Anspruch 8 oder 9, **dadurch gekennzeichnet, daß** die Filteranordnung Interferenzfilter aufweist.

11. Spektrometer nach einem der Ansprüche 8 bis 10, **dadurch gekennzeichnet, daß** die Empfängeranordnung mindestens einen Photodetektor aufweist.

12. Spektrometer nach einem der Ansprüche 8 bis 11, **dadurch gekennzeichnet, daß** ein zusätzlicher Photoempfänger zur Erfassung der Gesamtleistung der Strahlungsquelle vorgesehen ist.

13. Spektrometer nach einem der Ansprüche 8 bis 12, **dadurch gekennzeichnet, daß** die Stromversorgung mit einem Regelkreis verbunden ist, der die Strahlungsleistung der Strahlungsquelle und/oder der Zusatzstrahlungsquelle regelt.

## Claims

1. Method for testing the functionality of a spectrometer for faults, which has at least one radiation source, a filter assembly for breaking down the radiation into different wavelength ranges and a receiver assembly, **characterised in that** reference values are provided for at least two different colour temperatures of the radiation source and in each case for the different wavelength ranges, **in that** to test the spectrometer present reception signals are compared with the reference values at at least two colour temperatures to be adjusted, and **in that** in case of deviations the type of deviation is determined as a function of the wavelength ranges and the colour temperatures and certain faults are inferred from the type of deviation.

2. Method according to claim 1, **characterised in that** the current supply of the radiation source is controlled and/or regulated, a receiver being provided for detecting the total power of the radiation source in case of regulation.

3. Method according to claim 1 or 2, **characterised in that**. in case of deviations of the reception signals of all the different wavelength ranges at one colour temperature from the reference values by the same factor, a first fault is detected.

4. Method according to claim 1 or 2, **characterised in that**, if deviations arise in one or more wavelength ranges while no deviations arise in the remaining wavelength ranges, the colour temperature is varied and it is detected by what factor the respective deviation varies at different colour temperatures.

5. Method according to claim 4, **characterised in that**, in case of deviations with the same wavelength range and different colour temperatures by a constant factor, a second fault is detected.

6. Method according to claim 4, **characterised in that**, in case of deviations with the same wavelength range and different colour temperatures by a non-constant factor, a third fault is detected.

7. Method according to any of claims 1 to 6, **characterised in that** the reference values are provided as measured values measured with a reference spectrometer with N different wavelengths and n different colour temperatures as a N x n data space, and/or calculated with the Planck radiation formula.

8. Spectrometer with a radiation source for irradiating an object, a filter assembly for breaking down into different wavelength ranges the radiation transmitted or reflected at the object, and a receiver assembly for measuring the radiation and outputting reception signals for the different wavelength ranges, **characterised in that** there is provided a fault detection device (12) which includes the radiation source and/or a secondary radiation source and which has stored the reference values for the radiation to be measured with the different wavelength ranges and for different colour temperatures of the radiation source and/or the secondary radiation source and/or has calculated them according to the Planck radiation curve, and **in that** there is provided a variable current supply by which the colour temperature of the radiation source and/or the secondary radiation source is adjustable and **in that** the fault detection device compares the reception signals for different wavelength ranges and different colour temperatures with the corresponding reference values and determines the type of fault depending on the type of deviation in relation to the wavelength ranges and/or colour temperatures.

9. Spectrometer according to claim 8, **characterised in that** a light guide is provided for further conducting the reflected or transmitted radiation.

10. Spectrometer according to claim 8 or 9, **characterised in that** the filter assembly has interference filters.

11. Spectrometer according to any of claims 8 to 10, **characterised in that** the receiver assembly has at least one photodetector.

12. Spectrometer according to any of claims 8 to 11, **characterised in that** an additional photoreceiver is provided for detecting the total power of the radiation source.

13. Spectrometer according to any of claims 8 to 12, **characterised in that** the current supply is connected to a control circuit which regulates the radiation power of the radiation source and/or the secondary radiation source.

## Revendications

1. Procédé de contrôle de l'aptitude au fonctionnement d'un spectromètre concernant les défauts, présentant au moins une source de rayonnement, un dispositif de filtrage permettant de décomposer le rayonnement en différentes gammes de longueurs d'onde et un dispositif récepteur,
**caractérisé en ce que** des valeurs de référence sont générées avec au moins deux températures de couleur différentes de la source de rayonnement et avec respectivement les différentes gammes de longueurs d'onde, **en ce que**, pour le contrôle du spectromètre, les signaux reçus réels sont comparés avec les valeurs de référence pour au moins deux températures de couleur à régler, et **en ce qu'**en cas d'écarts, on détermine le type d'écart en fonction des gammes de longueurs d'onde et des températures de couleur, et on déduit des défauts déterminés à partir du type d'écart.

2. Procédé selon la revendication 1, **caractérisé en ce que** l'alimentation de la source de rayonnement est commandée et/ou régulée, un récepteur étant prévu pour enregistrer la puissance totale de la source de rayonnement lors d'une régulation.

3. Procédé selon la revendication 1 ou 2, **caractérisé en ce qu'**en cas d'écarts avec les valeurs de référence d'un facteur identique pour les signaux reçus avec toutes les gammes de longueur d'onde différentes pour une température de couleur, on identifie un premier défaut.

4. Procédé selon la revendication 1 ou 2, **caractérisé en ce qu'**en cas de survenue d'écarts dans une ou plusieurs gammes de longueur d'onde, tandis qu'aucun écart ne survient dans le reste des gammes de longueurs d'onde, la température de couleur est modifiée et on déterminé de quel facteur l'écart respectif se modifie avec différentes températures de couleur.

5. Procédé selon la revendication 4, **caractérisé en ce que**, en cas d'écarts d'un facteur constant sur une même gamme de longueur d'ondes et à différentes températures de couleur, on identifie un second défaut.

6. Procédé selon la revendication 4, **caractérisé en ce qu'**en cas d'écarts d'un facteur non constant pour une même gamme de longueur d'ondes et différentes températures de couleur, on identifie un troisième défaut.

7. Procédé selon l'une des revendications 1 à 6, **caractérisé en ce que** les valeurs de référence, en tant que valeurs mesurées avec un spectromètre de référence avec N longueurs d'onde différentes et n températures de couleur différentes, sont générées en tant qu'espace de données N x n et/ou calculées au moyen de la loi de rayonnement de Planck.

8. Spectromètre comportant une source de rayonnement permettant d'irradier un objet, un dispositif de filtrage permettant de décomposer le rayonnement réfléchi ou transmis au niveau de l'objet en différentes gammes de longueur d'onde, et un dispositif récepteur permettant de mesurer le rayonnement et d'émettre des signaux de mesure pour les différentes gammes de longueur d'onde,
**caractérisé en ce qu'**un dispositif de reconnaissance de défauts (12) est prévu, qui comprend la source de rayonnement et/ou une source de rayonnement supplémentaire, et qui a stocké les valeurs de référence pour le rayonnement à mesurer à différentes gammes de longueur d'onde et à différentes températures de couleur de la source de rayonnement et/ou de la source de rayonnement supplémentaire et/ou les calcule selon la courbe de rayonnement de Planck, et **en ce qu'**une alimentation réglable est prévue, par laquelle la température de couleur de la source de rayonnement et/ou de la source supplémentaire de rayonnement peut être réglée, et **en ce que** le dispositif de reconnaissance de défauts compare les signaux reçus pour les différentes gammes de longueur d'onde et les différentes températures de couleur aux valeurs de référence correspondantes, et détermine le type de défaut en fonction du type d'écart par rapport aux gammes de longueur d'onde et/ou aux températures de couleur.

9. Spectromètre selon la revendication 8, **caractérisé en ce qu'**une fibre optique est prévue pour transmettre le rayonnement réfléchi ou transmis.

10. Spectromètre selon la revendication 8 ou 9, **caractérisé en ce que** le dispositif de filtrage comprend un filtre interférentiel.

11. Spectromètre selon l'une des revendications 8 à 10, **caractérisé en ce que** le dispositif récepteur comprend au moins un photo-détecteur.

12. Spectromètre selon l'une des revendications 8 à 11, **caractérisé en ce qu'**un photorécepteur supplémentaire est prévu pour enregistrer la puissance totale de la source de rayonnement.

13. Spectromètre selon l'une des revendications 8 à 12, **caractérisé en ce que** l'alimentation est reliée à un circuit de réglage qui régule la puissance de rayonnement de la source de rayonnement et/ou de la source de rayonnement supplémentaire.
